# EUROPÄISCHE PATENTSCHRIFT

(11) **EP 3 036 183 B1**
(45) Veröffentlichungstag und Bekanntmachung des Hinweises auf die Patenterteilung: **11.10.2017**
(21) Anmeldenummer: 14752882.2
(22) Anmeldetag: 20.08.2014
(51) Int. Cl.: B65H 54/20, B65H 54/28, B65H 54/72, B65H 54/74

(54) **MICRODUCTROHRWICKLER, DOPPELSTELLENWICKLER, VERARBEITUNGSSYSTEM FÜR MICRODUCT-KUNSTSTOFFLEERROHRE UND VERFAHREN ZUM AUFWICKELN SOLCHER ROHRE**
MICRODUCT-TUBE WINDER, DOUBLE STATION WINDER, PROCESSING SYSTEM FOR EMPTY PLASTICS MICRODUCT TUBES AND METHOD FOR WINDING UP SUCH TUBES
ENROULEUR DE TUYAUX MICRO-CONDUITS, ENROULEUR À DEUX POSTES, SYSTÈME DE TRAITEMENT DE TUYAUX MICRO-CONDUITS VIDES EN MATIÈRE PLASTIQUE ET PROCÉDÉ PERMETTANT D'ENROULER LESDITS TUYAUX

(30) Priorität: 21.08.2013 DE 102013109056
(43) Veröffentlichungstag der Anmeldung: 29.06.2016
(73) Patentinhaber: KraussMaffei Technologies GmbH, 80997 München (DE); Graewe GmbH, 79395 Neuenburg (DE)
(72) Erfinder: HOFHUS, Michael, Shanghai, 200135 (CN); RÜDIGER, Martin, 81245 München (DE); GRAEWE, Michael, 79418 Schliengen/Liel (DE); PRECHSL, Dominik, 81927 München (DE); GRAEWE, Stefan, 79410 Badenweiler (DE)
(74) Vertreter: Roider, Stephan
(86) Internationale Anmeldenummer: PCT/EP2014/067732
(87) Internationale Veröffentlichungsnummer: WO 2015/024962

(56) Entgegenhaltungen:
- WO-A1-2012/146293
- WO-A2-2014/121812
- DE-A1- 4 127 319
- US-A1- 2010 288 868

## Beschreibung

Die Erfindung betrifft Microductrohrwickler zum Aufwickeln von extrudierten Microduct-Kunststoffleerrohren mit einem Außendurchmesser von ca. 2 bis ca. 20 mm, mit einer um eine Rotationsachse drehbaren Spule, die einen zwischen zwei radial abstehenden Flanschen angeordneten Kern aufweist, auf den das Rohr vorzugsweise in mehreren Lagen aufwickelbar ist und mit einer vorzugsweise der Spule vorgelagerten beweglichen Rohrleiteinrichtung, über die das Rohr der Spule zugeführt wird, wobei an der Rohrleiteinrichtung ein erster Übergabepunkt vorhanden ist, an dem das Rohr im Betriebszustand des Microductrohrwicklers einen Kontakt mit der Rohrleiteinrichtung verliert und wobei ein spulenzugeordneter zweiter Übergabepunkt vorhanden ist, an dem das Rohr in Kontakt mit dem Kern oder einer darauf gewickelten Rohrlage gelangt. Microductrohrwickler können auch als Wickelaggregate bezeichnet werden, mittels derer Microduct-Kunststoffleerrohre auf Spulen wickelbar sind.

Aus dem Stand der Technik sind bereits Vorrichtungen zum Herstellen und Speichern von aufwickelbaren Kunststoffrohren bekannt, etwa aus der DE 296 12 732 U1. Dort wird eine Anlage mit einer kontinuierlich arbeitenden Extrusionsvorrichtung zum Herstellen von Kunststoffrohren offenbart, welche mit einer nachgeordneten Aufwickelvorrichtung für die hergestellten Kunststoffrohre versehen ist. Dabei wird zwischen der Extrusionsvorrichtung und der Aufwickelvorrichtung eine Zwischenspeichervorrichtung zum Zwischenspeichern des kontinuierlich extrudierten Kunststoffrohres bei angehaltener Aufwickelvorrichtung verwendet.

Bei der Verarbeitung von Metallschnur, die aus einer Mehrzahl von Einzeldrähten gebildet ist, ist auch die Verwendung von Einfachschlag-Verseilmaschinen bekannt. So offenbart beispielsweise die DE 196 14 404 C1 eine Einfachschlag-Verseilmaschine mit offenem Verseilrotor, bei der beidseitig einer Spule Teller auf korrespondierenden Öffnungen von Spulenwangen aufsetzen und ein zumindest Zugkräfte übertragendes Mittel auf den von dem Antrieb der Spule weiter entfernt liegenden Teller wirkt.

Benachbarter Stand der Technik ist auch aus der DE 43 40 360 A1 bekannt, in der ein Verfahren und eine Vorrichtung zum Zwischenspeichern von strangförmigem Gut offenbart ist.

Verfahren und Vorrichtungen zum ausgleichenden Speichern von Verpackungsband in Verpackungsmaschinen ist auch aus der EP 0 139 088 B1 bekannt. Sie befindet sich jedoch auf einem anderen technischen Gebiet, nämlich der von Verpackungsbändern.

Auch die die DE 20 2005 004 817 U1 beschäftigt sich nicht mit Kunststoffleerrohren, schon gar nicht mit Microduct-Kunststoffleerrohren, sondern mit Fäden, in deren Zusammenhang eine Tänzersteuerung offenbart wird. Dabei wird ein Doppelspindelwickler zum kontinuierlichen Aufwickeln von Fäden eingesetzt, der einen Fadenwechsel von einer ersten Spindel auf eine zweite Spindel im laufenden Betrieb ermöglicht, wobei der Faden mittels einer Verlegeeinrichtung einer der Spindeln zugeführt wird, wobei ferner die beiden Spindeln nebeneinander mit parallel ausgerichteten, versetzten Spindelachsen angeordnet sind und der Faden über eine Fadenspannungssteuerung der Verlegeeinheit zugeführt wird.

Benachbarter Stand der Technik ist aus den Druckschriften WO 2012/146293 A1, US 2010/0288868 A1 und DE 41 27 319 A1 bekannt.

Die Erfindung betrifft auch Doppelstellenwickler mit zwei Microduct-Wicklern, wobei bereits vollautomatische Doppelwickler in anderen Anwendungsbereichen in Hochleistungsextrusionsanlagen mit hohen Extrusionsgeschwindigkeiten verwendet werden.

Häufig werden zum Antrieb der Spulen Drehstrommotoren verwendet, die tänzergesteuert sind oder über Zugkraft geregelt werden. Die Verlegung ist eventuell mit der Drehzahl des Wickelantriebs synchronisiert und kann stufenlos verstellt werden. Ein Umreifen geschaffener Ringbunde mit Bändern ist bisher bekannt, genauso wie das Einwickeln der Ringbunde in Folien. Dabei werden hin und wieder Kombinationswickler eingesetzt oder solche, die zum radialen Einwickeln der Bunde in Folie geeignet sind. Das Verwenden automatischer Wickler zum Verpacken der Ringbunde direkt in Kartonschachteln ist ebenfalls bekannt.

Üblich sind Microductrohrwickler mit fest fixierten Wickelstellen und verfahrbarem, beweglichen Verlegearm. Der Verlegearm bewegt sich dann quer zur Zufuhrrichtung der Microduct-Rohre. Leider tritt dabei viel Spiel auf und resultiert in Ungenauigkeiten, die ein schlechtes Verlegebild nach sich ziehen. In Extremfällen kann es sogar zu einem Wickelabbruch kommen. Bisher sind nur sehr kurze Coillängen möglich, bis ein Fehler auftritt. Um diese Probleme zu vermeiden wird häufig auf Handverlegung zurückgegriffen, was jedoch nicht CEkonform ist. Auch sind hierbei nur Geschwindigkeiten bis 50 m pro Minute möglich, was also stark effizienzhemmend wirkt.

Trotz allem ist das Aufwickelergebnis bisher eher mangelhaft, da immer noch Fehlstellen oder Überschläge des Rohres möglich sind. Unter "Fehlstellen" wird hier verstanden, dass das Rohr nicht nahtlos in Querrichtung an einen vorher verlegten Rohrabschnitt anschließt und so eine Lücke entsteht.

Ein "Überschlag" wird als Kreuzung zweier Rohrabschnitte verstanden. Ein solcher Überschlag kann einen Knick im Rohr nach sich ziehen. Der Durchgang durch den Leerraum des Kunststoffrohres ist dann nicht mehr oder nicht mehr ungehemmt möglich. In das Kunststoffleerrohr lassen sich dann nicht mehr elektrische Leitelemente wie Glasfasern einbringen, etwa einblasen. Die diesbezüglichen "Einblaslängen" werden dadurch stark reduziert.

Kleine Rohrdurchmesser von ca. 3 oder 4 bis ca. 10 mm lassen sich momentan gar nicht automatisch wickeln, ohne auf einen manuellen Eingriff zurückzugreifen. Ein erhöhtes Sicherheitsrisiko für das Bedienpersonal ist dann jedoch die Folge.

Die Problematiken, wie oben dargestellt, verstärken sich auch noch durch die Verwendung von kostengünstigen Spulen, die meist auf Holz- oder Kunststoffbasis bzw. ab und zu auf Metallbasis, wie Stahl aufgebaut sind. Schon die Maßhaltigkeit solcher Spulen ist bisher eingedenk der gewünschten Kostenreduktion mangelhaft. Bei der Verwendung bestehender Wickelaggregate treten dann die oben identifizierten Probleme in verstärkter Weise auf.

Es wurde versucht, vorgeschaltete Speicher, beispielsweise pneumatischer Betätigungsart zu verwenden, wodurch die Coilwechselzeiten überbrückt werden sollen. Unter "Coilwechselzeiten" wird die Zeit verstanden, die zum Wechseln einer mit Rohren völlig belegten Spule bis zum Ende des Einsetzens einer neuen rohrfreien Spule benötigt wird. Solche Speicher haben jedoch häufig den Nachteil, dass ein Wickler oder ein nachgeschalteter Bandabzug das Rohr durch den Speicher zieht und somit das Rohr eine Längung erfährt, was ungewollt ist, da dies der Präzision des Rohres abträglich ist.

Selbst bei Veränderungen an bestehenden Wicklern könnten bei sehr kleinen Microduct-Rohren bei hohen Geschwindigkeiten keine befriedigenden Ergebnisse erreicht werden. Sehr kleine Microduct-Rohre sind solche Rohre, die einen Rohraußendurchmesser von ≤ 2 mm, 3 mm, 4 mm, 5 mm, 6 mm, 7 mm, 8 mm, 10 mm, 12 mm, 14 mm, 16 mm, 18 mm oder 20 mm aufweisen. Auch sind dabei natürlich Zwischengrößen beinhaltet. Solche Microduct-Kunststoffleerrohre haben dabei eine Wanddicke von ca. 0,6 mm bis 2 mm. Diese Wanddicke setzt sich aus der durch das Kunststoffmaterial bedingten Materialstärke und einer auf der Innenseite vorhandenen Riffelung oder Silikonbeschichtung von ca. 0,15 mm zusammen. Das Verhältnis von Gewicht zu Meter in Kilogramm pro Meter beträgt zwischen 0,0145 bis 0,1115.

Übliche Ausstoßleistungen sind 104 kg pro Stunde bis 421 kg pro Stunde. Die Abzugsgeschwindigkeiten variieren zwischen 63 m pro Minute, 80 m pro Minute, 108 m pro Minute und 120 m pro Minute.

Unter "hohen Geschwindigkeiten" werden Geschwindigkeiten von 100 bis 125 m pro Minute und darüber hinaus, etwa in dem Bereich von ≥ 200 m pro Minute verstanden.

Es ist die Aufgabe der vorliegenden Erfindung, die Nachteile aus dem Stand der Technik abzustellen und Microduct-Kunststoffleerrohre überschlagsfrei wickeln zu können. Auch soll eine Längenausdehnung durch Zugspannung während des Wickelvorgangs verhindert werden, Ovalität ausgeschlossen werden und Knickstellen, etwa durch Überschläge, vermieden sein. Die Wickelpräzision soll erhöht werden. Trotzdem soll der Einsatz von preisgünstigen Holztrommeln weiter möglich sein und Toleranzschwankungen bedingt durch Feuchtigkeit, Fertigungsungenauigkeiten auf das Wickelbild keinen Einfluss haben. Auch soll das Einfädeln des Rohres keine negativen Auswirkungen auf das Wickelbild haben, insbesondere da die unterste Lage entscheidend für die darüber folgenden Lagen ist. Die "Einblaslänge", also die Länge, auf der Glasfasern nachträglich in die Microduct-Kunststoffleerrohre eingebracht werden können, soll möglichst groß sein. Die Bündelung mehrerer Microduct-Kunststoffleerrohre innerhalb eines Bündelrohrs soll nach wie vor möglich sein.

Diese Aufgabe wird bei einem gattungsgemäßen Microductrohrwickler erfindungsgemäß dadurch gelöst, dass die Rohrleiteinrichtung, so gelagert ist, um in einer Transversalebene der Spule, d. h. in einer Ebene senkrecht zur Rotationsachse der Spule, verfahrbar zu sein und, möglichst darauf abgestimmt, die Spule gelagert ist, um in Richtung ihrer Rotationsachse so verfahrbar zu sein, dass im Betriebszustand der Aufwickelwinkel, also der im dreidimensionalen Raum vorhandene Winkel zwischen dem spulenseitigen Rohr und dem rohrleiteinrichtungsseitigen Rohr, bzw. dem spulenseitigen Rohrabschnitt und dem rohrleiteinrichtungsseitigen Rohrabschnitt, beim zweiten Übergabepunkt stets unverändert bleibt, wobei der Aufwickelwinkel zwischen einer Horizontalebene und einem Schwert der Rohrleiteinrichtung ausgebildet ist und in einer Transversalebene verläuft.

Ein sauberes Verlegebild ist dann die Folge und eine präzise Verlegung ohne Überschlag des Microduct-Kunststoffleerrohres bei vorgegebener Wickellänge und maximaler Geschwindigkeit gewährleistet.

Vorteilhafte Ausführungsformen sind in den Unteransprüchen beansprucht und werden im Nachfolgenden erläutert.

So ist es von Vorteil, wenn die Spule zum gleichzeitigen Durchführen der Rotation um ihre Rotationsachse und Querverfahren in Rotationsrichtung, d. h. quer zur Zufuhrrichtung des Rohres gelagert ist. Während somit das Rohr aufgrund der Rotation der Spule aufgewickelt wird, wird das Rohr über das Querverfahren der Spule und die in Querrichtung feststehende Rohrleiteinrichtung spielfrei aufgewickelt. Ein gutes Verlegebild ist die Folge.

Mit anderen Worten ist es somit gewünscht, dass die Rohrleiteinrichtung so gelagert ist, dass sie bezüglich des zweiten Übergabepunktes im Betriebszustand nur in der Transversalebene verfahrbar ist. Dadurch wird die Präzision erhöht.

Es ist auch von Vorteil, wenn die Aufwickelgeschwindigkeit, der Rohraußendurchmesser und die Verfahrgeschwindigkeit der Rohrleiteinrichtung so aufeinander abgestimmt sind, dass im Betriebszustand der Abstand zwischen dem ersten Übergabepunkt und dem zweiten Übergabepunkt stets unverändert bleibt. Ein sich Entfernen des zweiten Übergabepunkts bei sich füllender Spule ist dann die Folge und gewünscht, da sich die Bedingungen zwischen dem ersten und dem zweiten Übergabepunkt dann nicht ändern und die Rohrleiteinrichtung dann nicht bremsend oder behindernd auf den Aufwickelvorgang einwirkt, insbesondere nicht ab einer bestimmten Lage. Ein optimaler trade-off ist die Folge.

Es ist auch zweckmäßig, wenn die Aufwickelgeschwindigkeit bedingt durch die Rotationsgeschwindigkeit der Spule und die Zuführgeschwindigkeit des Rohres so aufeinander abgestimmt sind, dass das Rohr am zweiten Übergabepunkt im Wesentlichen / nahezu oder vollständig zugspannungsfrei an die Spule übergeben ist/wird. Auftretende Ovalitäten im Rohr werden ausgeschlossen, genauso wie Längungen und ungewünschte Spannungserhöhungen auf die einzelnen Lagen des aufgewickelten Rohres im Bereich der Spule ausgeschlossen oder zumindest erheblich gemindert werden.

Die Führung wird auch verbessert, wenn die Rohrleiteinrichtung einen Hauptkörper aufweist, an dem ein armartiges Schwert aufgebracht ist, wobei das Rohr an dem Schwert entlanggeführt ist.

Dabei ist es von Vorteil, wenn am distalen, spulenzugewandten Ende des Schwerts zwei Rollen im ersten Übergabepunkt bzw. direkt benachbart angeordnet sind, zwischen denen das Rohr durchgeführt ist. Ein Abspringen des Rohres vom Schwert wird dann wirkungsvoll ausgeschlossen.

Um den Abstand möglichst präzise regeln oder ansteuern zu können, ist es von Vorteil, wenn am Schwert, vorzugsweise am distalen Ende, ein Abstandssensor angeordnet ist, der zum Abstandbestimmen zwischen dem Schwert und der Spule, etwa dem Flansch, dem Kern und/oder einer auf dem Kern wenigstens teilweise vorhandenen Rohrlage ausgelegt ist.

Als effizient hat es sich herausgestellt, wenn der Abstandssensor als mechanischer Sensor oder berührungslos arbeitender Sensor, etwa als kapazitiver, induktiver oder lichtsensitiver Sensor, beispielsweise unter Nutzung einer Kamera ausgelegt ist.

Um eine gewisse Verfahrbarkeit der Rohrleiteinrichtung oder Teilen davon zu gewährleisten, ist es zweckmäßig, wenn der Hauptkörper zum Verfahren an einer Führungsschiene angebunden ist. Wenn die Führungsschiene parallel zu einer die Rotationsachse mit dem zweiten Übergabepunkt verbindenden Radialverbindungslinie ausgerichtet ist oder angestellt dazu ist, etwa in Richtung von der Spule weg angestellt ist, so wird immer auf ähnliche Verhältnisse zurückzugreifen sein. Dadurch ist die Reproduzierbarkeit des Wickelergebnisses über den Wickelprozess hinweg verbessert.

Es ist von Vorteil, wenn das Schwert um seine Längsachse schwenkbar am Hauptkörper angebunden ist. Auf diese Weise kann das Rohr immer möglichst nahe an den Flansch herangebracht werden, ohne dass das Schwert hierbei abstandsbestimmend bzw. -hinderlich wäre. Eine maximale Nutzung der zwischen den Flanschen befindlichen Spulenbreite durch das aufzuwickelnde ist dann die Folge.

Es hat sich auch als vorteilhaft herausgestellt, wenn am distalen Ende des Schwerts ein Auflageelement wie ein Auflagekeil angeordnet ist, um mit dem auf dem Kern oder einer auf dem Kern abgelegten Rohrlage in Kontakt zu gelangen. Ein Schleifkontakt ist dann möglich aber nicht in allen Anwendungsfällen nötig/gewünscht.

Es ist auch von Vorteil, wenn der Rohrleiteinrichtung eine Schneideinrichtung nach Art einer Guillotine zugeordnet ist. Eine solche Guillotine kann von einer Steuereinrichtung bedarfsgerecht, beispielsweise in Abhängigkeit des bereits aufgewickelten Rohres betätigt werden. Es ist möglich, dass im dem Betriebszustand vorgelagerten Anhakzustand das Schwert aus der Transversalebene in Richtung des Flansches aktiv verschwenkt wird/ist. Ein Teil des Rohres kann dann durch eine Ausnehmung, wie ein Loch, im Flansch der Spule durchgeführt werden und dabei formschlüssig gehalten werden. Nach dem Anhakzustand fährt das Schwert wieder in seine im Betriebszustand nicht verlassene Position zurück, verbleibt also in der Transversalebene, in der die beiden Betriebspunkte, also der erste und der zweite Betriebspunkt liegen.

Spielminimierend ist es, wenn das Schwert als kurzes, massives Metallteil, etwa als Stahlbauteil, ausgeführt ist.

Es hat sich auch als vorteilhaft herausgestellt, wenn der Kern mit einer Beschichtung versehen ist, etwa mit einem in Rotationsachsenrichtung reibungserhöhend wirkenden und/oder dazu orthogonal, insbesondere in Radialrichtung komprimierbarem Material, wie Moosgummi.

Die Erfindung betrifft auch ein Verarbeitungssystem für von einer Extrusionsvorrichtung geschaffene Microduct-Kunststoffleerrohre, mit einem Microductrohrwickler der erfindungsgemäßen Art und einem vorgelagerten Speicher und einem diesem vorgelagerten Bandabzug.

Es ist dabei möglich, dass in dem Verarbeitungssystem auch ein Doppelstellenwickler eingesetzt ist, der zwei Microductrohrwickler der erfindungsgemäßen Art verwendet. Dieser Doppelstellenwickler kann einen gemeinsamen Rahmen, wie ein Gestell, etwa ein Rohrgestell, aufweisen.

Auch ist es von Vorteil, wenn zwischen dem Bandabzug und dem Speicher eine vorzugsweise elektrische Tänzersteuerung angeordnet ist.

Weitere vorteilhafte Ausführungsformen eines erfindungsgemäßen Verarbeitungssystems werden wie folgt umrissen.

So ist es von Vorteil, wenn der Speicher zwei elektrisch, pneumatisch und/oder hydraulisch zueinander verfahrbare Spulen aufweist, die vom Rohr zumindest teilweise umschlungen sind. Auf diese Weise kann eine Wechselzeit von ca. 20 Sekunden gewährleistet sein, aber auch größere Wechselzeiten realisiert werden. Pufferzeiten von wenigstens 60 Sekunden sind dann realisierbar.

Wenn zwischen dem Speicher und dem Microductrohrwickler ein Entlastungsabzug und/oder eine beim Wechseln der Spule selektiv betätigbare Zusatzfördereinrichtung vorhanden ist, so kann der Wechsel der Spule komfortabler gestaltet werden und gleichzeitig weniger Zeit ungenutzt verstreichen.

Die Erfindung betrifft auch ein Fertigungssystem mit einer Extrusionsvorrichtung und einem erfindungsgemäßen Verarbeitungssystem.

Letztlich betrifft die Erfindung auch ein Verfahren nach Anspruch 8, insbesondere eines zum Aufwickeln eines Microduct-Kunststoffleerrohres mit einem Außendurchmesser von ca. 2 mm bis ca. 20 mm auf einem zwischen zwei Flanschen angeordneten Kern einer Spule, wobei das Rohr von einer Rohrleiteinrichtung an einen ersten Übergabepunkt an die Spule zu einem zweiten Übergabepunkt übergeben wird und die Rohrleiteinrichtungen im Betriebszustand, etwa wenn das Übergeben des Rohres an die Spule mit dortiger nachfolgender Aufwicklung stattfindet, nur in einer Transversalebene der um eine Rotationsachse rotierenden Spule bewegt wird, wobei die Spule dabei in Richtung der Rotationsachse kontinuierlich oder schrittweise verfahren wird, derart, dass der Aufwickelwinkel stets im Wesentlichen unverändert bleibt.

Dabei ist es von Vorteil, wenn vor dem Ablegen des Rohres die Rohrleiteinrichtung während eines Teach-In-Vorgangs von einem Flansch, diesen sensierend, zum anderen Flansch, diesen sensierend, fährt. Auf diese Weise kann einem Wechsel der Qualität und Bemaßung unterschiedlicher Spulen Rechnung getragen werden und auf einem eventuellen sonst notwendigen Richtvorgang verzichtet werden.

Wenn ein Schwert der Rohrleiteinrichtung den Kern (dabei) abtastet, etwa berührungslos oder mechanisch, kann der Steuereinrichtung die für das weitere Verfahren notwendige Information zur Verfügung gestellt werden. Die beim Abtasten erhobenen Daten werden im weiteren Verfahrensablauf sinnvoll weiter eingesetzt.

So ist es von Vorteil, wenn im Betriebszustand nach dem Erfassen der unmittelbaren Gegenwart eines der beiden Flansche oder einem Ende des Kerns die Linearbewegungsrichtung der Spule entlang ihrer Rotationsachse umgekehrt wird. Dies erzwingt somit einen Richtungswechsel der Linearbewegung der Spule, bei kontinuierlicher Rotation der Spule..

Die Linearbewegungsrichtung wird vorteilhaft auch sofort nach dem Erfassen oder nach einer solchen Zeitspanne umgekehrt, die benötigt ist, dass sich die Spule um 180 ° dreht. Eine optimale Raumausnutzung ist dann die Folge.

Wenn mehrere Lagen an Rohrabschnitten/Rohren, beispielsweise 30 oder mehr Lagen, auf den Kern gewickelt werden, so kann eine ausreichend lange Rohrkonfiguration an den Verlegeort verbracht werden.

Es ist auch von Vorteil, wenn eine auf die Lagen projizierte Laserkennung, die eine Linie auf die obersten Rohrabschnitte einer oder mehrerer durch das Rohr gebildeten Lagen projiziert wird und die Laserkennung über ein Bilderkennungssystem erfasst wird und die erfassten Daten einer Auswerteinheit zugeführt werden, welche die Wickelqualität bestimmt.

Die vorstehenden Aspekte sind untereinander kombinierbar und austauschbar.

Je wärmer das Rohr wird, desto kritischer ist die Verarbeitung, da bei Abkühlung bzw. während eines Abkühlprozesses auch ein Schrumpfen auftritt und etwaige Überschläge/Kreuzungen sich dann extrem kritisch auswirken. Die Toleranzen der Durchmesser der Monorohre werden bei der Erfindung ausgeglichen, genauso wie eine Geschwindigkeitsvariabilität keine großen Auswirkungen mehr hat.

Mit anderen Worten werden Rohrgeschwindigkeiten bis in den Bereich von 200 m pro Minute möglich. Rohrdurchmesserbereiche von 3 bis 14 mm, eventuell auch größer, sind verarbeitbar. Voll- oder halbautomatische Doppelstellwickler lassen sich generieren. Es treten nur noch geringe Toleranzen im Gesamtsystem auf. Um dem Bediener für den Coilwechsel ausreichend Zeit zu geben, etwa zur Verfügung stellbare Speicherkapazität von mindestens 1 Minute, ist die Verwendung elektrischer Speicher mit Tänzersteuerung vor einem Doppelstellenwickler von Vorteil. Auch ist ein Bandabzug mit einer ausreichenden Kontaktlänge von 800 bis 1000 mm und angepasster Abzugskraft von Vorteil.

Die Erfindung lässt sich weiterbilden durch die Verwendung von traversierenden Spulen mit Präzisionsverstellungseinrichtungen, etwa Kugelspindeln / Kugelgewindetrieben, die wenig Spiel aufweisen, einer verstärkten/starren Verlegeführung, wobei sich die Wickelstelle bewegt und nicht der Verlegearm. Dieser Verlegearm ist bei entsprechender Ausführung starr. Es ist von Vorteil, wenn die Lagerung der Wickelwelle, etwa bei Verwendung einer dickeren Achse, verstärkt ist.

Ein manuelles Anhaken kann durch ein automatisches Anhaken als Erweiterung ersetzt werden, wodurch keine Unruhe beim Start ins System gebracht wird. Es lassen sich Einfädelhilfen über zwei angetriebene Rollen am Einlauf des Wicklers verwenden, wodurch ein automatisches Durchschieben zur zweiten Wickelstelle erreicht ist. Die Verlegung selber ist starr für beide Wickelstellen. Die Rohrführung kann wahlweise mit einem etwa mechanischen Auflagekeil oder einer berührungslosen Verlegung, etwa einem Ultraschallsensor versehen sein. Die berührungslose Verlegung kann auf schwenkende Führungsrollen zurückgreifen. Eine Positioniersteuerung ist genauso wünschenswert, wie eine taktweise Verlegung.

Auch eine Verlegung mit Vertikalachse, d. h. Schaffung der Lagen beim Rückziehen des Schwerts bei der Verlegung mit oder ohne Flanschabtastung ist möglich.

Es lassen sich unterschiedliche Spulen verwenden, wobei die Spulenbreite von 400 mm bis 800 mm variieren kann. Der Spulendurchmesser kann von 800 mm bis 1200 mm variieren. Eine Aufnahmebohrung im Kernbereich, der durch die Flansche und den Kern der Spule dringt, kann 40, 50 oder 60 mm betragen. Der Kerndurchmesser selber kann 600 mm bis 800 mm auf seiner Außenseite messen. Das Gesamttrommelgewicht kann ca. 300 kg betragen.

Ein Haltewinkel für Front- und Rückseite der Spule kann getrennt eingegeben werden. Der Haltewinkel kann variabel über dem Trommeldurchmesser sein. Um die Abmessungen der Spule in der Steuerung zu validieren kann ein "Teach-In"-Vorgang der jeweiligen Spulenabmessung über eine Flanschabtastung erfolgen. Ein Abtasten der Spulenqualität beim Einlegen der Spule, mit nachfolgender Meldung, wenn die Spule den Anforderungen nicht genügt, kann fehlerbeseitigend wirken. Als Kernbeschichtung bieten sich unterschiedliche Materialien an, wie z. B. mit Moosgummi.

Die Qualität der Spule in Bezug auf die Fertigungsgenauigkeit, insbesondere in puncto Ein-oder Mehrweg, Feuchtigkeit etc., hat erheblichen Einfluss auf das Wickelbild.

Die Steuerung kann mit einer Jog-Taste für Korrekturen versehen sein um manuelle Eingriffsmöglichkeiten des Bedienpersonals zu gewährleisten. Die Positionierung findet in der Anwickelposition statt. Ein "Teach-In" kann auch für die Umkehrpunkte (d.h. bei Richtungsänderung der Querbewegung der Spule) erfolgen. Längs eingeleitete Zugspannungen, die bei Monorohren/ Microduct-Kunststoffleerrohren zu vermeiden sind, werden wirkungsvoll niedrig gehalten. Insbesondere die Verarbeitung von Polyethylen-/HDPE-Rohren, wird möglich.

Eine Steigerung der Produktivität jeder Microduct-Monorohrlinie ist erreichbar. Geschwindigkeiten bis 200 m pro Minute sind realisierbar. Ein sauberes Verlegebild, ohne Überschlag und somit ohne Knickbildung ist die Folge. Die Steigerung der Bedienerfreundlichkeit durch mehrere Automatisierungsstufen ist ebenfalls umsetzbar. Auf diese Weise können hocheffiziente Komplettlinien für die Produktion von Microduct-Linien aus einer Hand zur Verfügung gestellt werden.

Die Erfindung wird nachfolgend mit Hilfe einer Zeichnung näher erläutert. Es zeigen:
- Figur 1: einen erfindungsgemäßen Doppelstellenwickler mit zwei Microductrohrwicklern in einer perspektivischen Darstellung, wobei zwar eine Rohrleiteinrichtung für jede Spule der Microductrohrwickler dargestellt ist, nicht jedoch das verlegte, bzw. zu verlegende Rohr,
- Figur 2: eine Ansicht von vorne auf den Doppelstellenwickler aus Figur 1
- Figur 3: eine Ansicht von der Seite, von der das Rohr zugeführt wird, auf den Doppelstellenwickler der Figuren 1 und 2
- Figur 4: eine Ansicht von oben auf den Doppelstellenwickler aus Fig. 3 mit maximal nach vorne quer verschobenen Spulen,
- Figur 5: eine perspektivische Ansicht nur einer Spule, auf die das Rohr aufgewickelt wird,
- Figur 6: eine Detailansicht des Bereichs VI aus Figur 1,
- Figur 7: eine Detailansicht des Bereichs VII aus Figur 1,
- Figur 8: eine Detaildarstellung des Bereichs VIII aus Figur 1,
- Figur 9: eine Ansicht von vorne auf motorisierte Traversiereinheiten, die auf jede der Spulen des Doppelstellenwicklers querverschiebend einwirken,
- Figur 10: eine Vergrößerung des Bereichs der motorisierten Traversiereinheiten aus Figur 9,
- Figur 11: eine weitere Ansicht von vorne auf eine weitere Ausführungsform eines Doppelstellenwicklers, ähnlich zu der Variante aus Figur 1,
- Figuren 12a bis 12c: eine schematische Darstellung der Verschiebbarkeit der Spulen eines erfindungsgemäßen Doppelstellenwicklers (Figur 12a) und den in zwei Extrempositionen verstellten Zustand der Spulen, d. h. minimal und maximal quer verfahrenen Spulen (Figuren 12b und 12c),
- Figur 13: eine Vergrößerung zweier Rohrleiteinrichtungen, wie sie an einem Doppelstellenwickler der Ausführungsformen der Figuren 1 und 11 verwendet ist,
- Figur 14: eine Vergrößerung einer der beiden Rohrleiteinrichtungen aus Figur 13,
- Figur 15: eine weitere perspektivische Darstellung der Rohrleiteinrichtung aus Figur 14,
- Figur 16a: und 16b zwei unterschiedliche Ausführungsformen von Rohrleiteinrichtungen mit sich unterscheidenden Schwertern,
- Figur 17: eine perspektivische Darstellung einer Rohrleiteinrichtung mit drehbarem Schwert,
- Figur 18: eine Ansicht von vorne auf die Rohrleiteinrichtung aus Figur 17,
- Figur 19: eine Ansicht von oben auf die Rohrleiteinrichtung der Figuren 17 und 18,
- Figur 20: eine Ansicht von der Seite, von der das Rohr der Rohrleiteinrichtung zugeführt wird auf die Rohrleiteinrichtung,
- Figur 21: einen Schnitt entlang der Linie XXI durch die Rohrleiteinrichtung aus Figur 19,
- Figur 22: eine schematische Darstellung eines kontinuierlichen, versetzten Wickelns von Rohrabschnitten zum Ausbilden von Rohrlagen,
- Figur 23: der Aufbau der Lagen bei taktweiser Verlegung und Verwendung von Lichtsensoren, kapazitiven Sensoren, mechanischen Sensoren und/oder induktiven Sensoren,
- Figur 24: eine Ansicht von vorne auf ein erfindungsgemäßes Verarbeitungssystem,
- Figur 25: eine Ansicht von oben auf das erfindungsgemäße Verarbeitungssystem aus Figur 24,
- Figur 26: eine Ansicht von der Rohrzuführseite auf das Verarbeitungssystem aus Figur 24 und
- Figur 27: eine perspektivische Ansicht des Verarbeitungssystems der Figuren 24 und 25.

Die Figuren sind lediglich schematischer Natur und dienen lediglich dem Verständnis der Erfindung. Die gleichen Elemente sind mit denselben Bezugszeichen versehen. Es ist möglich, dass erfindungsgemäße Komponenten weggelassen oder ausgetauscht werden. Auch sind Merkmale bestimmter Ausführungsbeispiele auf andere Ausführungsbeispiele übertragbar.

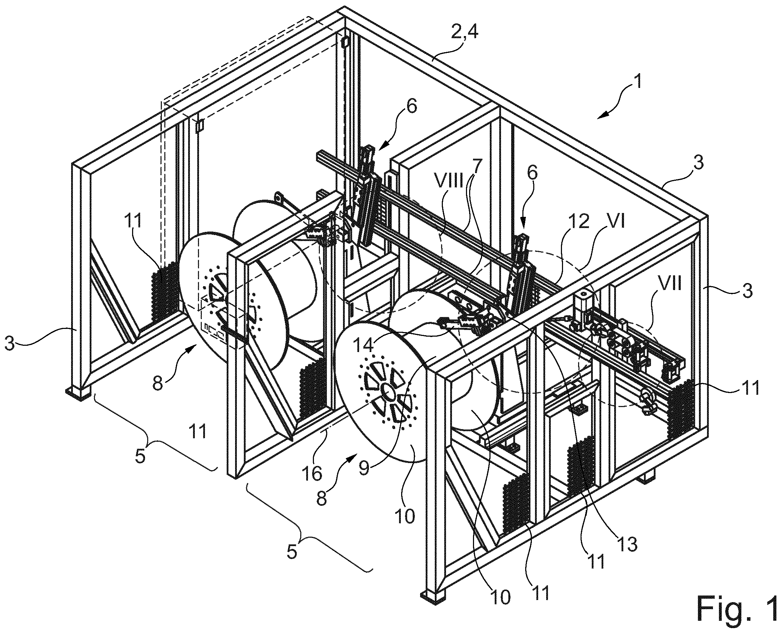

In Fig. 1 ist ein erfindungsgemäßer Doppelstellenwickler 1 dargestellt. Der Doppelstellenwickler 1 weist einen Rahmen 2 auf. Der Rahmen 2 kombiniert einzelne Tragrohre/Rohre 3 zu einem Gestell 4. Die Tragrohre/Rohre 3 können als runde oder eckige Hohlrohre ausgestaltet sein.

Innerhalb des Gestells 4 sind zwei Microductrohrwickler 5 vorhanden. Jeder Microductrohrwickler 5 weist eine Rohrleiteinrichtung 6 auf. Die Rohrleiteinrichtung 6 ist dabei verfahrbar an zwei Führungsschienen 7 gelagert. Die Rohrleiteinrichtung 6 führt ein nicht dargestelltes Microduct-Kunststoffleerrohr einer Spule 8 zu, wobei die Spule 8 einen Kern 9 zwischen zwei Flanschen 10 aufweist. Die Flansche 10 können perforiert sein, insbesondere ein Loch aufweisen, zum Durchführen eines Anfangsbereichs des Rohres, um ein Anhaken zu ermöglichen.

Das Gestell 4 kann an einigen Stellen ein Gitter 11 aufweisen, um die Verletzungsgefahr zu minimieren.

An den Führungsschienen 7 ist eine Leitbahn 12 angebracht, an der entlang ein Hauptkörper 13 der Rohrleiteinrichtung 6 verfahren werden kann. Dem Kern 9 zugewandt, ragt ein Schwert 14 vom Hauptkörper 13 weg.

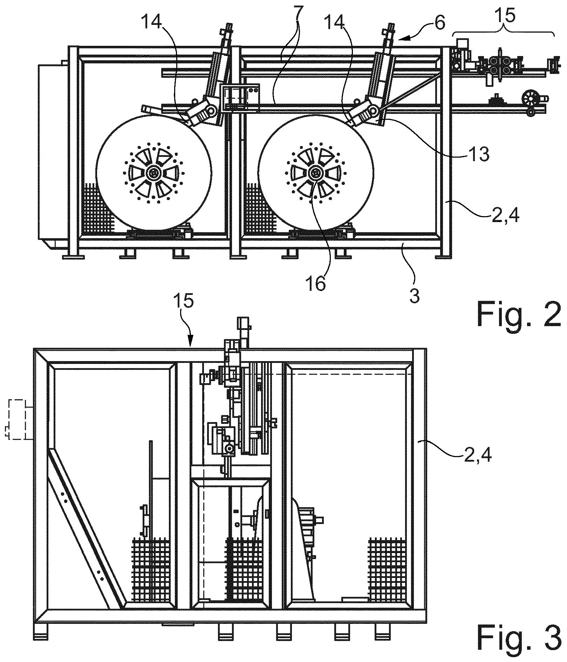

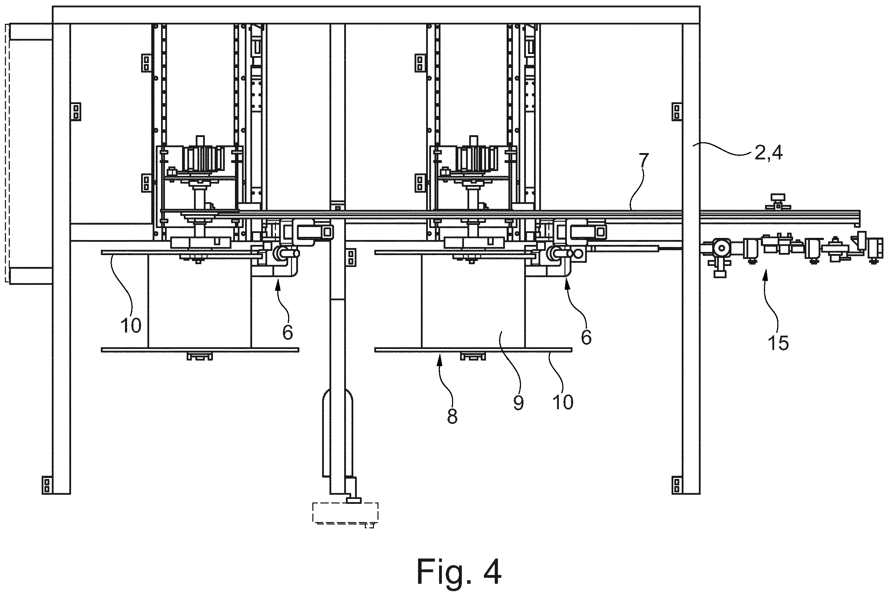

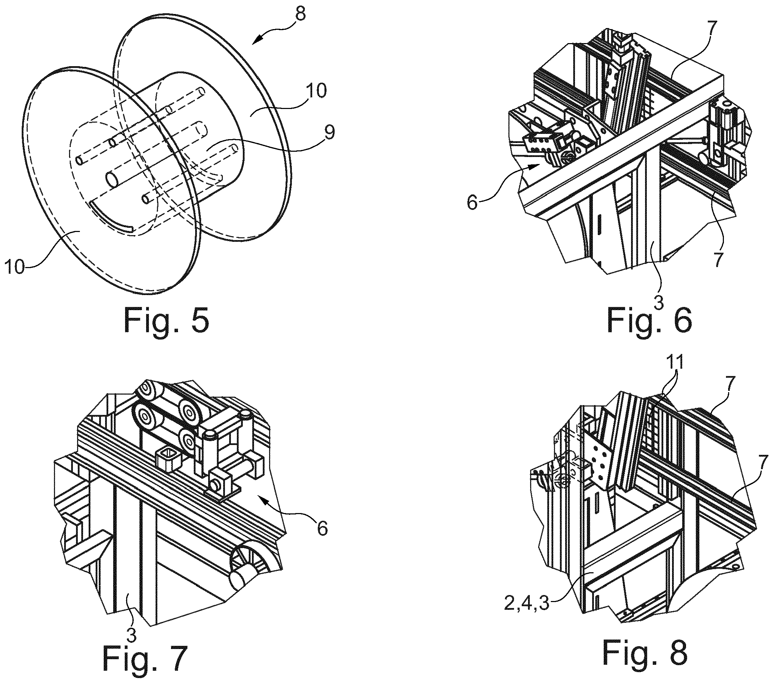

Am Eingang des Gestells 4 ist, wie in den Figuren 2 bis 4 gut zu erkennen ist, eine Zusatzfördereinrichtung 15 vorhanden. Das Schwert 14 ist im Betriebszustand in einer Transversalebene, also einer Ebene, die senkrecht zu einer Rotationsachse 16 der Spule 8 steht, beweglich gelagert. Die Verbindungsarten sowie die Details in den Bereichen VI bis VIII aus Figur 1 sind in den Figuren 6 bis 8 dargestellt.

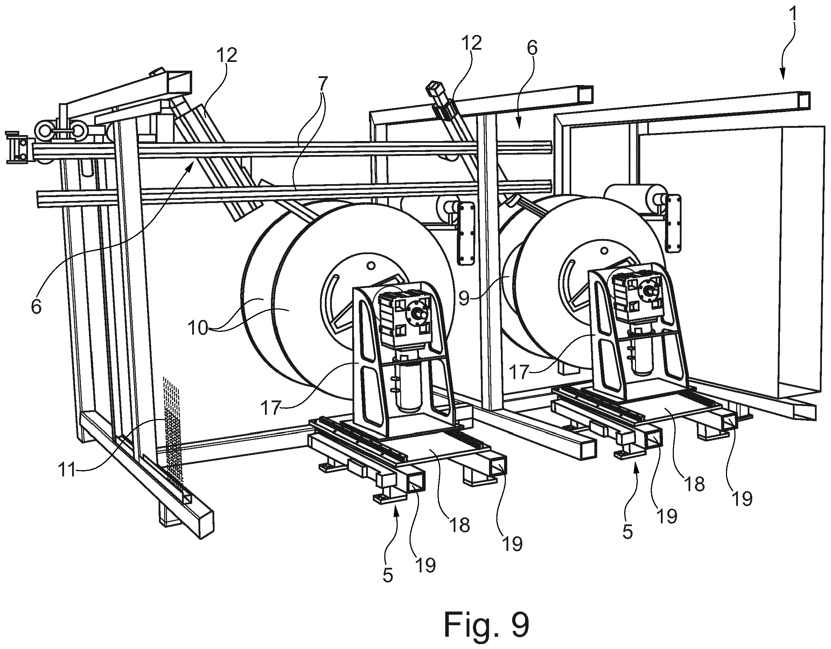

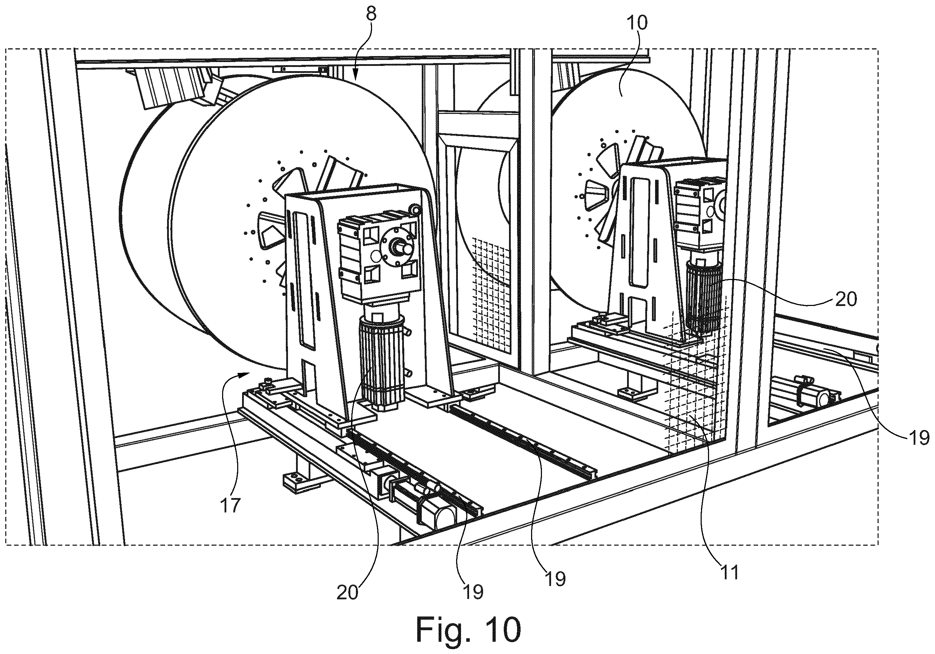

In Figur 9 ist jeder Microductrohrwickler-Einheit 5 je eine motorisierte Traversiereinheit 17 zugeordnet. Die Traversiereinheit 17 ist dabei jeweils auf einer Führungsplatte 18 angebracht und entlang von Leitschienen 19 beweglich. Diese Leitschienen 19 sind auch gut in Figur 10 dargestellt, wobei ein Motor 20, nach Art eines Elektromotors, ein Teil der Traversiereinheit 17 ist.

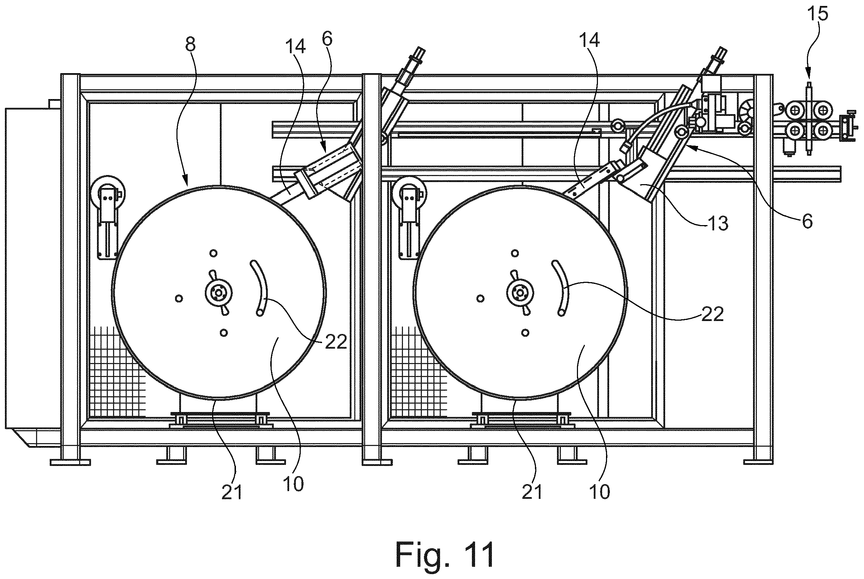

In der Transversalebene der Spule 8 stellt sich, wie in Figur 11 dargestellt ist, zum Schwert 14 der Rohrleiteinrichtung 6 ein Winkel α ein, der in dieser Ebene dem Aufwickelwinkel entspricht. Der Aufwickelwinkel ist zwischen einer Horizontalebene und dem Schwert 14 ausgebildet und verläuft in der Transversalebene. Im Betriebszustand verläuft somit das Rohr zwischen einem ersten Übergabepunkt am distalen Ende des Schwerts 14 zu einem zweiten Übergabepunkt im Bereich der Spule 8 gerade. Dieser Rohrabschnitt liegt also in der Transversalebene.

Dass ein Endstück 21 in einer Ausnehmung 22 formschlüssig eingehakt ist, ist der Figur 11 gut zu entnehmen. Ansonsten ist das zu verarbeitende Microduct-Kunststoffleerrohr nicht dargestellt.

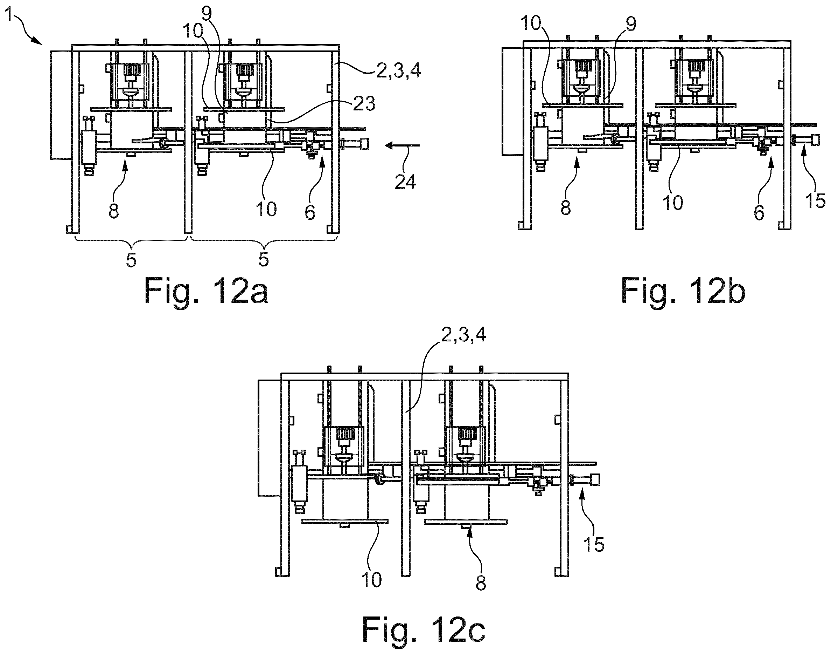

In Figur 12a ist die Querverschieblichkeit der Spule 8 in Richtung des Pfeils 23 dargestellt. Der Pfeil 23 gibt die Rohrzuführrichtung 24 an. Die unterschiedlichen Verfahrpositionen der Spule 8 ist den Figuren 12b und 12c zu entnehmen.

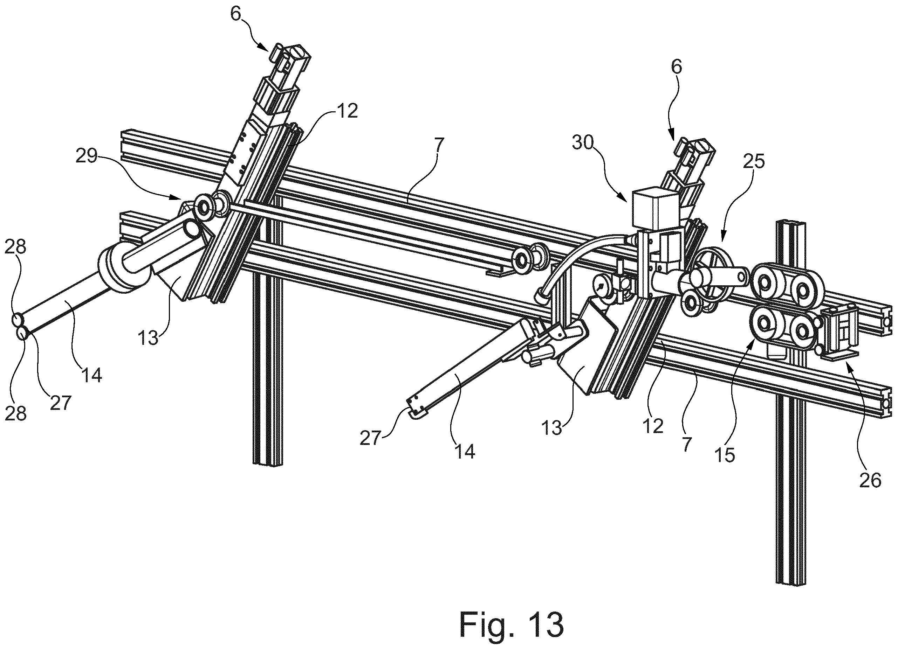

Unter Bezugnahme auf Figur 13 sei erläutert, dass die Rohrleiteinrichtung 6 einen Encoder/Kodierer 25 zum Erfassen der bereits passierten Rohrlänge vorhanden ist. Die Zusatzfördereinrichtung 15 kann auch als "Micro-Haul-off" bezeichnet werden. Auch eine Zentriereinheit 26 ist dem Encoder 25 und der Zusatzfördereinrichtung 15 vorgelagert, d. h. auf der Seite eines nicht dargestellten Extruders von der Leiteinrichtung 6 angeordnet.

Der Hauptkörper 13 kann als Manschette ausgeführt sein, oder als abgewinkeltes Tragobjekt. An einem distalen Ende 27 des Schwerts 14 sind zwei Leitrollen 28 angebracht, zwischen denen das nicht dargestellt Microduct-Kunststoffleerrohr durchgeführt wird. Eine Zusatzleitrolle ist im Bereich des Hauptkörpers 13 angeordnet und mit dem Bezugszeichen 29 versehen.

Die Rohrleiteinrichtung 6 ist nach Art einer Doppelachsenführungseinheit ausgebildet. Auch ist eine Schneideinrichtung 30 nach Art einer Guillotine an der Rohrleiteinrichtung 6 angebracht.

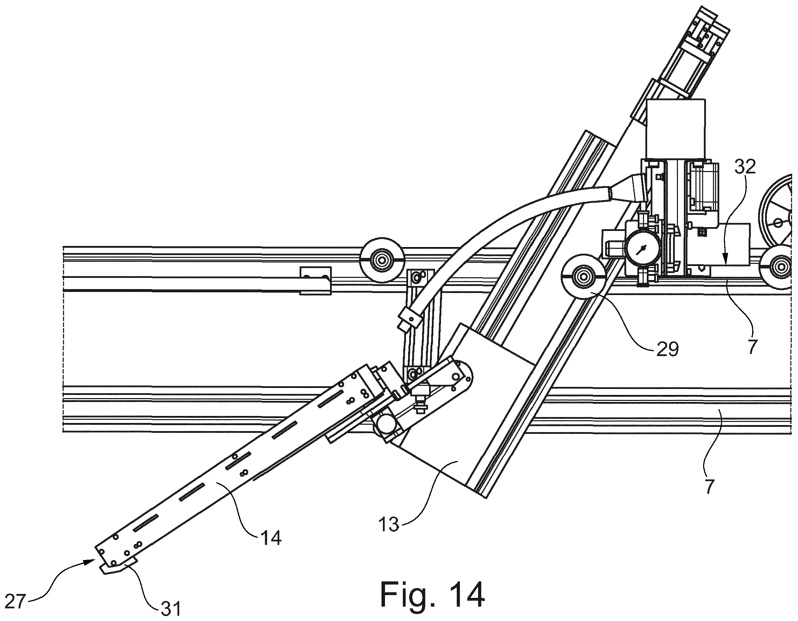

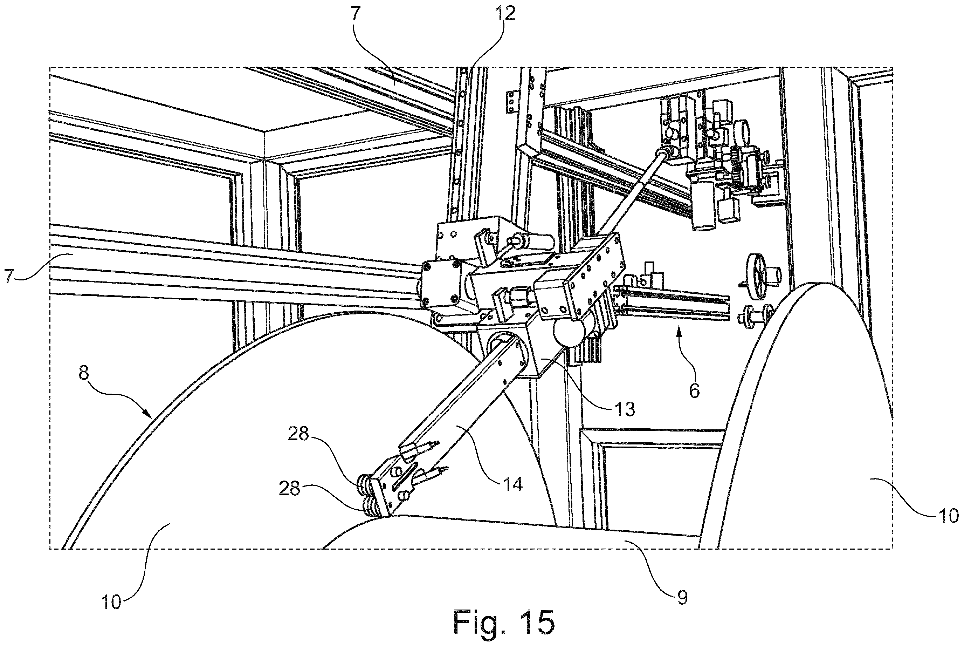

Eine der beiden in Figur 13 dargestellten Rohrleiteinrichtungen 6 ist in Figur 14 vergrößert dargestellt. Allerdings sind die beiden Leitrollen 28 am distalen Ende nicht zu erkennen, stattdessen ist ein Abstandselement 31 vorhanden, das nach Art eines Keiles ausgebildet ist. Ein für schleifenden Kontakt geeignetes Material ist hierbei ausgewählt. Ein Führungsabschnitt 32 ist zum Aufnehmen des Microduct-Kunststoffleerrohres vorgesehen. Das Schwert 14 ist drehbar/schwenkbar am Hauptkörper 13 angebunden. Dabei wird auf Figur 15 verwiesen.

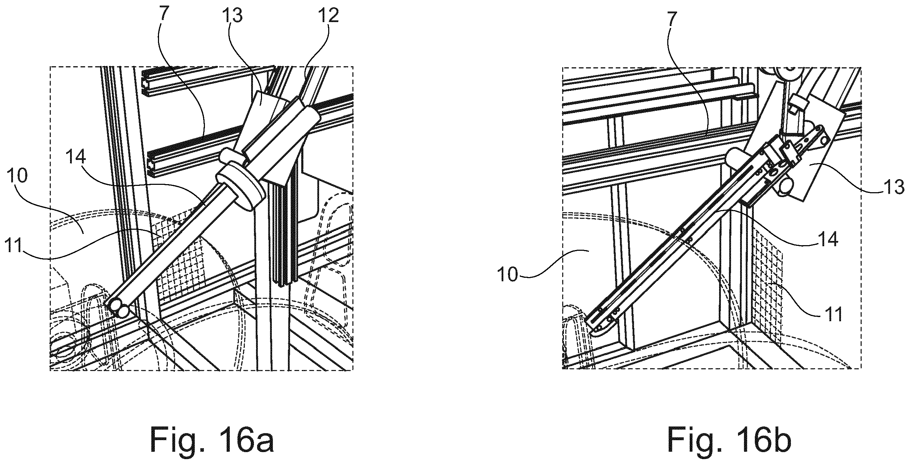

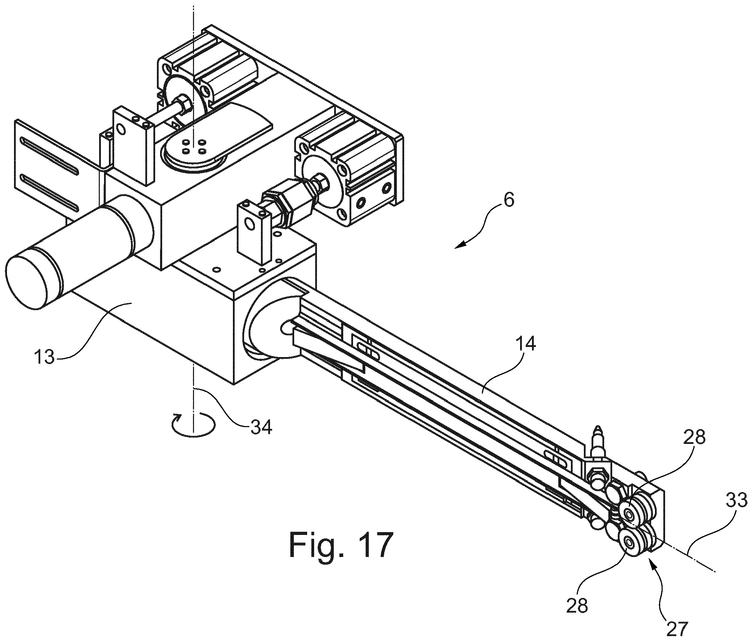

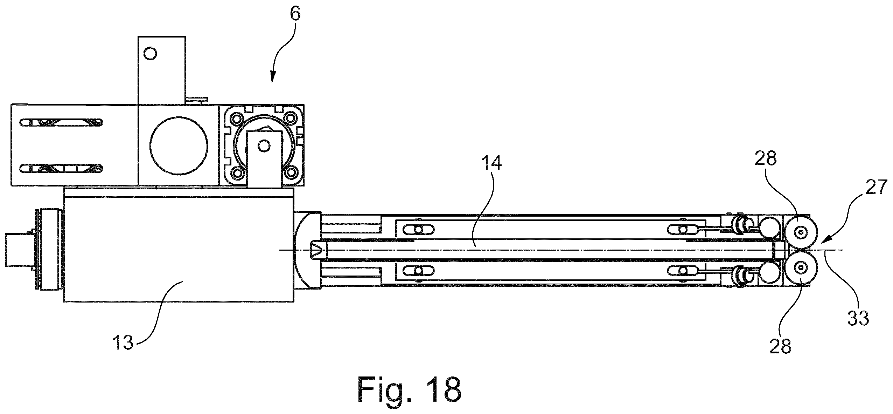

Dass das Schwert 14 mit mechanischen Sensoren oder Ultraschallsensoren zur Abstandsbestimmung versehen werden kann, ist in Anbetracht der Figur 16b selbsterklärend. Entsprechendes geht auch aus den Figuren 17 bis 21 hervor. So ist bspw. in Figur 17 die Schwenkbarkeit um die Schwenkachse 33 des Schwertes 14 angedeutet, genauso wie ein Verschwenken um die Drehachse 34 im Anhakzustand mit dem Pfeil 35 angedeutet ist.

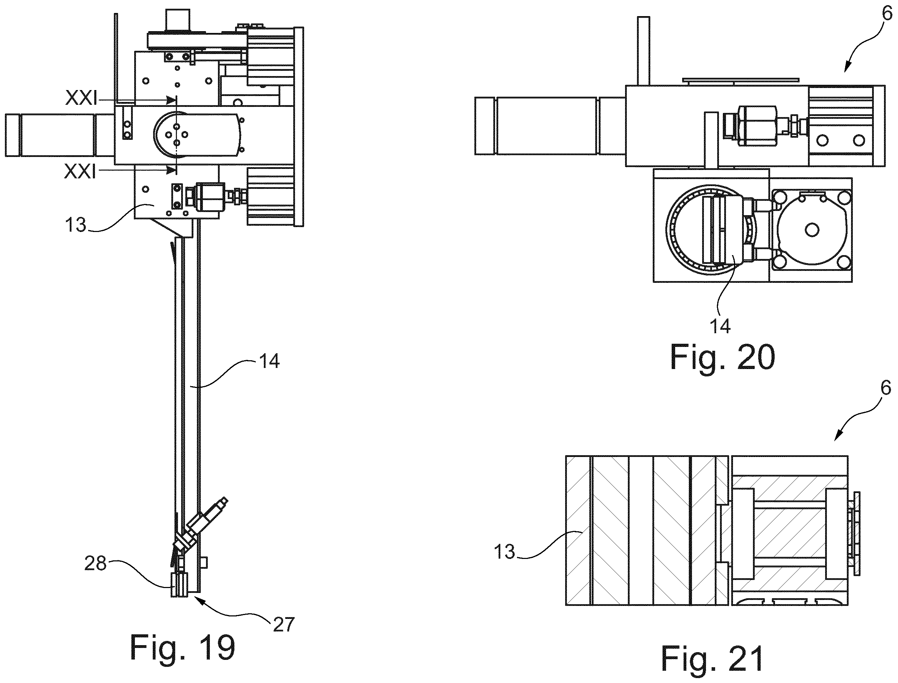

Die Lagerausgestaltung im Bereich XXI durch den Hauptkörper 13 hindurch ist in Figur 21 visualisiert.

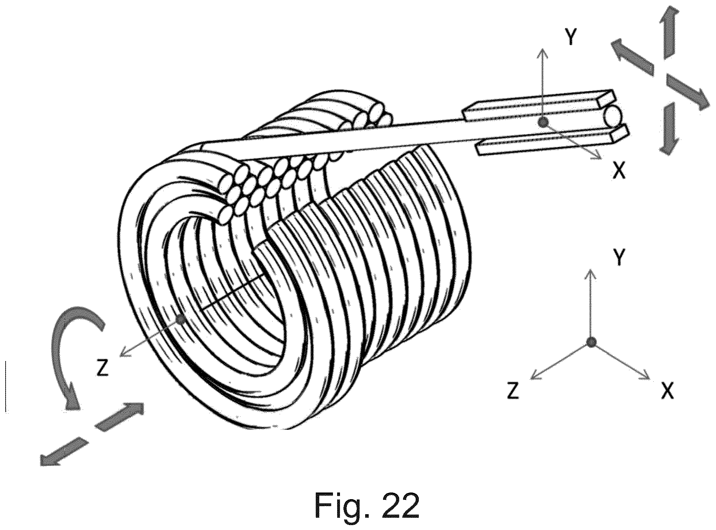

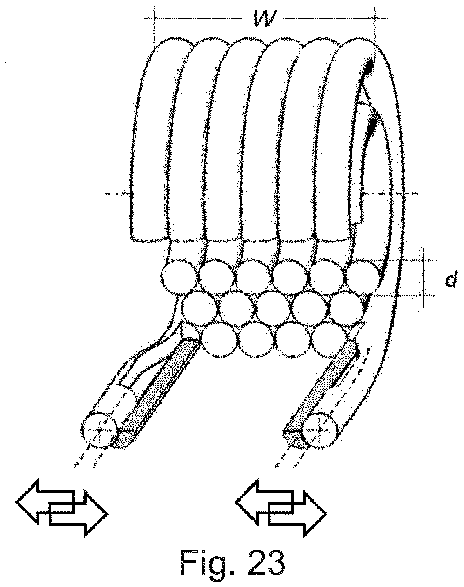

In den Figuren 22 und 23 ist das Aufwickeln der Microduct-Kunststoffleerrohre in Lagen dargestellt, wobei in Figur 22 ein kontinuierlicher Versatz hervorgerufen wird und in Figur 23 ein ruckweises Versetzen erzwungen wird. Eine Lage an Rohren bzw. Rohrabschnitten hat dabei die Breite W, wobei ein Rohraußendurchmesser mit d symbolisiert wird.

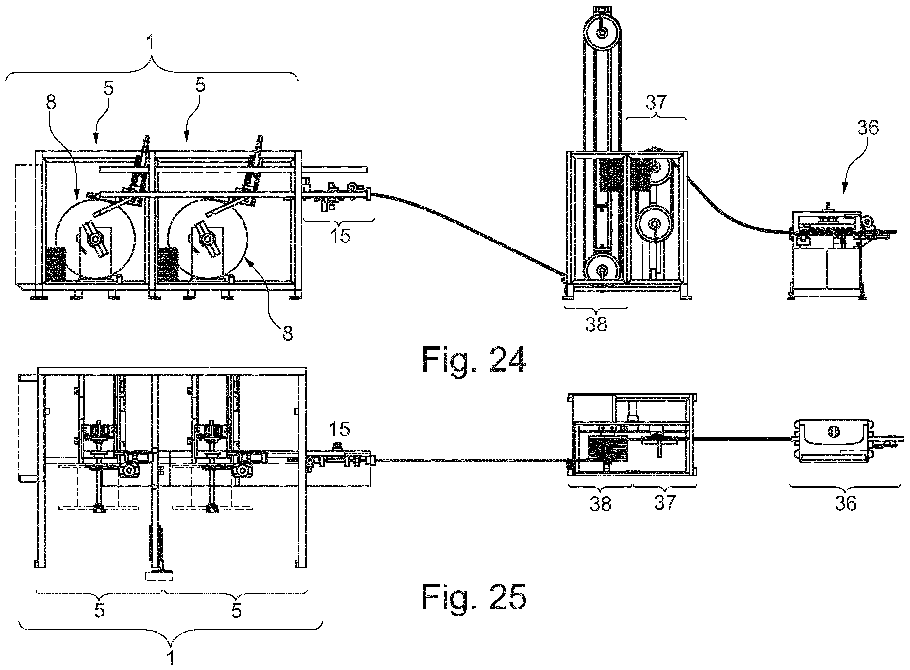

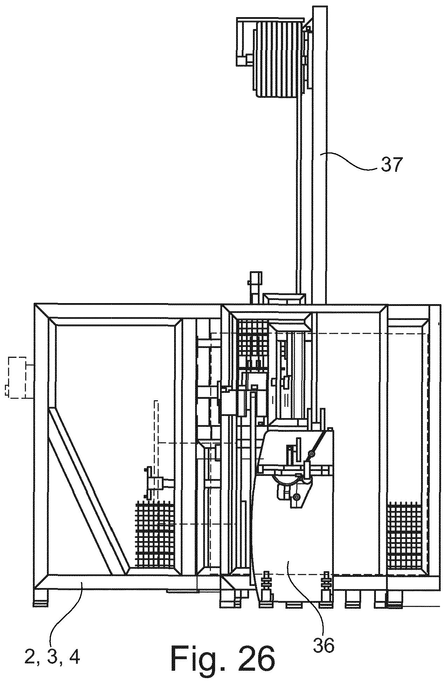

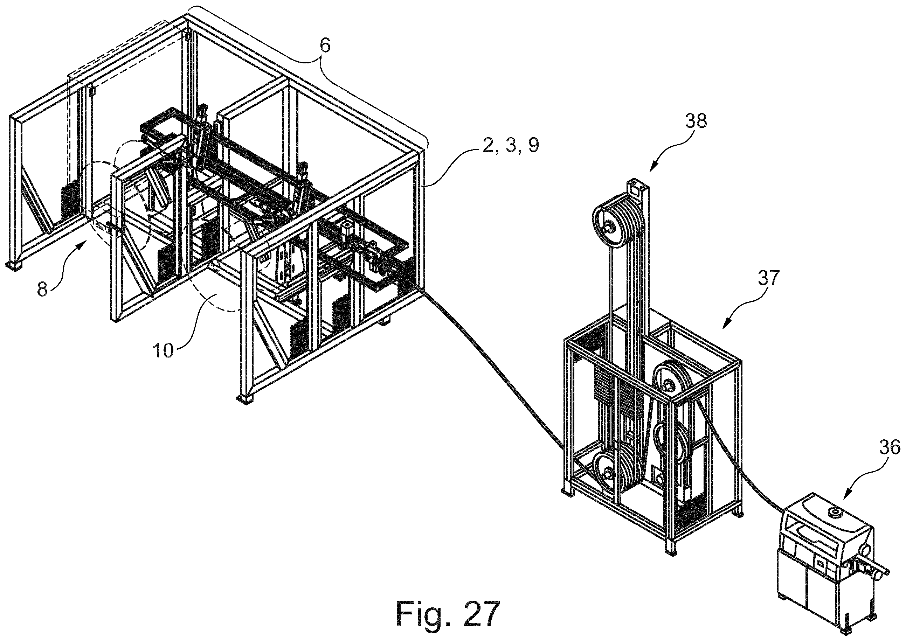

Die Reihenfolge der Anordnung der Einzelaggregate in einer Förderlinie ist den Figuren 24 bis 27 zu entnehmen. Ein Extruder ist zwar nicht dargestellt, aber weiter rechts, also fern der beiden Microductrohrwickler 5 angeordnet. Ein vom Extruder geschaffenes Microduct-Kunststoffleerrohr gelangt dann in einen Bandabzug 36 und wird an einer Tänzersteuerung 37 vorbei bzw. hindurch zu einem Speicher 38, insbesondere einem elektrischen Speicher geleitet.

Ein nachgeordneter Entlastungsabzug mit optionalem Tänzer und/oder einer Zusatzfördereinheit 15 führt dem Doppelstellenwickler 1 das Microduct-Kunststoffleerrohr zum Aufwickeln zu.

Statt einem Tänzer zwischen dem Speicher 38 und dem Doppelstellenwickler 1 ist auch die Messung des Durchhangs praktizierbar, beispielsweise unter Einsatz einer Ultraschallsensorik.

**Bezugszeichenliste**

| | | | |
|---|---|---|---|
| 1 | Doppelstellenwickler | 21 | Endstück des Rohres |
| 2 | Rahmen | 22 | Ausnehmung |
| 3 | Rohr | 23 | Pfeil/Querverschiebungsrichtung |
| 4 | Gestell | 24 | Rohrzuführrichtung |
| 5 | Microductrohrwickler | 25 | Encoder/Kodierer |
| 6 | Rohrleiteinrichtung | 26 | Zentriereinrichtung/Zentriereinheit |
| 7 | Führungsschiene | 27 | distales Ende des Schwerts |
| 8 | Spule | 28 | Leitrolle |
| 9 | Kern | 29 | Zusatzleitrolle |
| 10 | Flansch | 30 | Schneideinrichtung |
| 11 | Gitter | 31 | Abstandselement |
| 12 | Leitbahn | 32 | Führungsabschnitt |
| 13 | Hauptkörper | 33 | Schwenkachse |
| 14 | Schwert | 34 | Drehachse |
| 15 | Zusatzfördereinrichtung | 35 | Pfeil/Schwenkrichtung im Anhakzustand |
| 16 | Rotationsachse | | |
| 17 | Traversiereinheit | 36 | Bandabzug |
| 18 | Führungsplatte | 37 | Tänzersteuerung |
| 19 | Leitschiene | 38 | Speicher |
| 20 | Motor | | |

## Patentansprüche

1. Microductrohrwickler (5) zum Aufwickeln von extrudierten Microduct-Kunststoffleerrohren mit einem Außendurchmesser von ca. 2 bis ca. 20 mm, mit einer um eine Rotationsachse (16) drehbaren Spule (8) die einen zwischen zwei radial abstehenden Flanschen (10) angeordneten Kern (9) aufweist, auf den das Rohr aufwickelbar ist, und mit einer Rohrleiteinrichtung (6), über die das Rohr der Spule (8) zugeführt wird, wobei an der Rohrleiteinrichtung (6) ein erster Übergabepunkt vorhanden ist, an dem das Rohr im Betriebszustand des Microductrohrwicklers (5) einen Kontakt mit der Rohrleiteinrichtung (6) verliert und wobei ein spulenzugeordneter zweiter Übergabepunkt vorhanden ist, an dem das Rohr in Kontakt mit dem Kern (9) oder einer darauf gewickelten Rohrlage gelangt, **dadurch gekennzeichnet, dass** die Rohrleiteinrichtung (6) so gelagert ist, um in einer Transversalebene der Spule (8) verfahrbar zu sein und die Spule (8) gelagert ist, um in Richtung ihrer Rotationsachse (16) so verfahrbar zu sein, dass im Betriebszustand ein Aufwickelwinkel (α), also der im dreidimensionalen Raum vorhandene Winkel zwischen dem spulenseitigen Rohr und dem rohrleiteinrichtungsseitigen Rohr bzw. dem spulenseitigen Rohrabschnitt und dem rohrleiteinrichtungsseitigen Rohrabschnitt, wobei der Aufwickelwinkel (α) zwischen einer Horizontalebene und einem Schwert (14) der Rohrleiteinrichtung (6) ausgebildet ist und in der Transversalebene verläuft, am zweiten Übergabepunkt stets unverändert bleibt.

2. Microductrohrwickler (5) nach Anspruch 1, **dadurch gekennzeichnet, dass** die Spule (8) zum gleichzeitigen Durchführen der Rotation um ihre Rotationsachse (16) und Querverfahren in Rotationsachsenrichtung gelagert ist.

3. Microductrohrwickler (5) nach einem der Ansprüche 1 oder 2, **dadurch gekennzeichnet, dass** die Rohrleiteinrichtung (6) einen Hauptkörper (13) aufweist, an dem ein armartiges Schwert (14) angebracht ist, wobei an dem Schwert (14) das Rohr entlanggeführt ist.

4. Doppelstellenwickler (1) mit zwei Microductrohrwicklern (5) nach einem der vorhergehenden Ansprüche.

5. Verarbeitungssystem für von einer Extrusionsvorrichtung geschaffene Microduct-Kunststoffleerrohre, mit einem Microductrohrwickler (5) nach einem der Ansprüche 1 bis 4, und einem vorgelagerten Speicher (38) und einem diesen vorgelagerten Bandabzug (36).

6. Verarbeitungssystem nach Anspruch 5, **dadurch gekennzeichnet, dass** zwischen dem Bandabzug (36) und dem Speicher (38) eine vorzugsweise elektrische Tänzersteuerung (37) angeordnet ist.

7. Fertigungssystem mit einer Extrusionsvorrichtung und einem Verarbeitungssystem nach einem der Ansprüche 5 oder 6.

8. Verfahren zum Aufwickeln eines Microduct-Kunststoffleerrohres mit einem Außendurchmesser von ca. 2 mm bis ca. 20 mm auf einen zwischen zwei Flanschen (10) angeordneten Kern (9) einer Spule (8), wobei das Rohr von einer Rohrleiteinrichtung (6) an einem ersten Übergabepunkt, an dem das Rohr im Betriebszustand einen Kontakt mit der Rohrleiteinrichtung (6) verliert, zu einem zweiten Übergabepunkt, an dem das Rohr in Kontakt mit dem Kern (9) oder einer aufgewickelten Rohrlage gelangt, an der Spule (8) übergeben wird und die Rohrleiteinrichtung (6) im Betriebszustand nur in einer Transversalebene der um eine Rotationsachse (16) rotierenden Spule (8) bewegt wird, **dadurch gekennzeichnet, dass** die Spule (8) dabei in Richtung der Rotationsachse (16) kontinuierlich oder schrittweise verfahren wird, derart, dass ein Aufwickelwinkel (α), also der im dreidimensionalen Raum vorhandene Winkel zwischen dem spulenseitigen Rohr und dem rohrleiteinrichtungsseitigen Rohr bzw. dem spulenseitigen Rohrabschnitt und dem rohrleiteinrichtungsseitigen Rohrabschnitt, wobei der Aufwickelwinkel (α) zwischen einer Horizontalebene und einem Schwert (14) der Rohrleiteinrichtung (6) ausgebildet ist und in der Transversalebene verläuft, bei einem spulenzugeordneten Übergabepunkt stets unverändert bleibt.

## Claims

1. A microduct tube winder (5) for winding empty extruded plastic microduct tubes with an external diameter of approx. 2 to approx. 20 mm, having a spool (8), which can be rotated about an axis of rotation (16) and has a core (9) arranged between two radially protruding flanges (10), onto which core the tube can be wound, and having a tube guiding device (6), by means of which the tube is supplied to the spool (8), a first handover point being present on the tube guiding device (6), at which the tube loses contact with the tube guiding device (6) in the operating state of the microduct tube winder (5), and a spool-assigned second handover point being present, at which the tube comes into contact with the core (9) or a tube layer wound thereon, **characterized in that** the tube guiding device (6) is mounted so as to be displaceable in a transverse plane of the spool (8) and the spool (8) is mounted so as to be displaceable in such a manner in the direction of the axis of rotation (16) thereof, that a winding angle (α), that is to say the angle present in the three-dimensional space between the spool-side tube and the tube-guiding-device-side tube or the spool-side tube section and the tube-guiding-device-side tube section, wherein the winding angle (α) is formed between a horizontal plane and a blade (14) of the tube guiding device (6) and runs in the transverse plane, always remains unchanged at the second handover point in the operating state.

2. The microduct tube winder (5) according to Claim 1, **characterized in that** the spool (8) is mounted for the simultaneous execution of the rotation about the axis of rotation (16) thereof and transverse movement in the direction of the axis of rotation.

3. The microduct tube winder (5) according to one of Claims 1 or 2, **characterized in that** the tube guiding device (6) has a main body (13), on which an arm-like blade (14) is attached, wherein the tube is guided along the blade (14).

4. A dual-station winder (1) having two microduct tube winders (5) according to one of the preceding claims.

5. A processing system for empty plastic microduct tubes created by an extrusion device, having a microduct tube winder (5) according to one of Claims 1 to 4, and an upstream-mounted storage unit (38) and a belt pull-off device (36) mounted upstream of the same.

6. The processing system according to Claim 5, **characterized in that** a preferably electrical dancer control (37) is arranged between the belt pull-off device (36) and the storage unit (38).

7. A manufacturing system having an extrusion device and a processing system according to one of Claims 5 or 6.

8. A method for winding an empty plastic microduct tube with an external diameter of approx. 2 mm to approx. 20 mm onto a core (9) of a spool (8) arranged between two flanges (10), the tube being transferred on the spool (8) from a tube guiding device (6) at a first handover point, at which the tube loses contact with the tube guiding device (6) in the operating state, to a second handover point, at which the tube comes into contact with the core (9) or a wound tube layer, and the tube guiding device (6) in the operating state only being moved in a transverse plane of the spool (8) rotating about an axis of rotation (16), **characterized in that** the spool (8) in this case is moved in the direction of the axis of rotation (16) continuously or step-by-step in such a manner that a winding angle (α), that is to say the angle present in the three-dimensional space between the spool-side tube and the tube-guiding-device-side tube or the spool-side tube section and the tube-guiding-device-side tube section, wherein the winding angle (α) is formed between a horizontal plane and a blade (14) of the tube guiding device (6) and runs in the transverse plane, always remains unchanged at the spool-assigned handover point.

## Revendications

1. Enrouleur de tuyaux micro-conduits (5) pour enrouler des tuyaux micro-conduits vides en plastique extrudés ayant un diamètre extérieur d'environ 2 à environ 20 mm, comprenant une bobine (8) rotative sur un axe de rotation (16) qui présente un noyau (9) disposé entre deux brides (10) éloignées radialement, sur lequel le tuyau peut être enroulé, et comprenant un dispositif de guidage de tuyau (6) par lequel le tuyau est dirigé vers la bobine (8), dans lequel un premier point de transfert est présent sur le dispositif de guidage de tuyau (6) sur lequel le tuyau perd un contact avec le dispositif de guidage de tuyau (6) dans l'état de fonctionnement de l'enrouleur de tuyaux micro-conduits (5) et dans lequel un second point de transfert attribué à la bobine est présent, sur lequel le tuyau entre en contact avec le noyau (9) ou une support de tuyau enroulée dessus, **caractérisé en ce que** le dispositif de guidage de tuyau (6) est disposé de façon à pouvoir être déplacé dans un plan transversal de la bobine (8) et la bobine (8) est agencée pour pouvoir être déplacée dans le sens de son axe de rotation (16) de telle façon que dans l'état de fonctionnement, un angle d'enroulement (α), soit l'angle disposé dans l'espace tridimensionnel entre le tuyau côté bobine et le tuyau côté dispositif de guidage de tuyau, respectivement le tronçon de tuyau côté bobine et le tronçon de tuyau côté dispositif de guidage de tuyau, dans lequel l'angle d'enroulement (α) est formé entre un plan horizontal et une diagonale (14) du dispositif de guidage de tuyau (6) et passe dans le plan transversal, reste toujours inchangé sur le second point de transfert.

2. Enrouleur de tuyaux micro-conduits (5) selon la revendication 1, **caractérisé en ce que** la bobine (8) est disposée pour exécuter simultanément la rotation sur son axe de rotation (16) et le déplacement transversal dans le sens de l'axe de rotation.

3. Enrouleur de tuyaux micro-conduits (5) selon la revendication 1 ou 2, **caractérisé en ce que** le dispositif de guidage de tuyau (6) présente un corps principal (13) sur lequel une diagonale (14) de type bras est posée, dans lequel le tuyau est dirigé le long de la diagonale (14).

4. Enrouleur à deux postes (1) comprenant deux enrouleurs de tuyaux micro-conduits (5) selon l'une des revendications précédentes.

5. Système de traitement pour des tuyaux micro-conduits vides en plastique produits par un dispositif d'extrusion, comprenant un enrouleur de tuyaux micro-conduits (5) selon l'une des revendications 1 à 4, et un réservoir en amont (38) et une évacuation par bande (36) en amont de celui-ci.

6. Système de traitement selon la revendication 5, **caractérisé en ce qu'**une commande libre (37) de préférence électrique est disposée entre l'évacuation par bande (36) et le réservoir (38).

7. Système de fabrication comprenant un dispositif d'extrusion et un système de traitement selon l'une des revendications 5 ou 6.

8. Procédé d'enroulement d'un tuyau micro-conduit vide en plastique ayant un diamètre extérieur d'environ 2 à environ 20 mm, sur un noyau (9) d'une bobine (8) disposé entre deux brides (10) éloignées radialement, dans lequel le tuyau est transféré à la bobine (8) à partir d'un dispositif de guidage de tuyau (6) sur un premier point de transfert sur lequel, dans l'état de fonctionnement, le tuyau perd un contact avec le dispositif de guidage de tuyau (6), vers un second point de transfert sur lequel le tuyau entre en contact avec le noyau (9) ou un support de tuyau enroulé dessus et le dispositif de guidage de tuyau (6), dans l'état de fonctionnement, est déplacé uniquement dans un plan transversal de la bobine (8) tournant sur un axe de rotation (16), **caractérisé en ce que** la bobine (8) est ainsi déplacée continuellement ou par paliers en direction de l'axe de rotation (16), de telle sorte qu'un angle d'enroulement (α), soit l'angle disposé dans l'espace tridimensionnel entre le tuyau côté bobine et le tuyau côté dispositif de guidage de tuyau, respectivement le tronçon de tuyau côté bobine et le tronçon de tuyau côté dispositif de guidage de tuyau, dans lequel l'angle d'enroulement (α) est formé entre un plan horizontal et une diagonale (14) du dispositif de guidage de tuyau (6) et passe dans le plan transversal, reste toujours inchangé sur un point de transfert correspondant à la bobine.
